# EUROPÄISCHE PATENTSCHRIFT

(11) **EP 2 727 169 B1**
(45) Veröffentlichungstag und Bekanntmachung des Hinweises auf die Patenterteilung: **13.06.2018**
(21) Anmeldenummer: 12730511.8
(22) Anmeldetag: 26.06.2012
(51) Int. Cl.: H01M 10/60

(54) **WIEDERAUFLADBARE ELEKTRISCHE BATTERIE**
RECHARGEABLE ELECTRIC BATTERY
BATTERIE ÉLECTRIQUE RECHARGEABLE

(30) Priorität: 30.06.2011 AT 9572011
(43) Veröffentlichungstag der Anmeldung: 07.05.2014
(73) Patentinhaber: AVL List GmbH, 8020 Graz (AT)
(72) Erfinder: MICHELITSCH, Martin, A-8062 Kumberg (AT)
(74) Vertreter: Babeluk, Michael
(86) Internationale Anmeldenummer: PCT/EP2012/062338
(87) Internationale Veröffentlichungsnummer: WO 2013/000900

(56) Entgegenhaltungen:
- DE-A1-102008 034 699
- DE-C1- 3 133 773
- DE-C1- 4 407 156
- JP-A- 2007 109 546

## Beschreibung

Die Erfindung betrifft eine wiederaufladbare elektrische Batterie, insbesondere Hochspannungsbatterie, vorzugsweise für ein Elektrofahrzeug, mit zumindest zwei Stapel von in Stapelrichtung aneinandergereihten Batteriezellen, wobei die Stapel quer zur Stapelrichtung nebeneinander angeordnet sind, wobei zumindest zwei nebeneinander angeordnete Stapel in Stapelrichtung versetzt zueinander angeordnet sind.

Batteriepackungen, bestehend aus mehreren Lithium-Ionen-Batteriezellen, beinhalten neben diesen eine Reihe weiterer Subsysteme wie Zellbefestigungen, Zellkühlung, Zellüberwachung, Zellverbindungen, oder dergleichen. Die Integration dieser Subsysteme benötigt zusätzlichen Bauraum, der weit über das von der Zellchemie eingeschlossene Volumen hinausgeht. Die wirkt sich nachteilig auf die im Vergleich zu fossilen Brennstoffen bereits geringere volumetrische Energiedichte auf

Auf Grund der Bauform verschiedenster bekannter Lithium-Ionen-Pouch Zellen, bei denen die Kunststoffzellenhüllen seitlich umlaufend um die aktive Zellchemie mittels einer Siegelnaht abgedichtet werden, entstehen bei Aneinanderreihung mehrerer Zellen Zwischenräume. Diese Zwischenräume können technisch schwer genutzt werden, da diese auf Grund der Fertigungstoleranzen der Batteriezellen nur sehr grob bemaßt werden können und sich mitunter durch die hervorstehenden Siegelnähte in kleine Einzelzwischenräume aufteilen.

Aus der DE 10 2009 035 463 A1 ist eine Batterie mit einer Vielzahl von flachen, im Wesentlichen plattenförmigen Batterieeinzelzellen bekannt. Die Batterieeinzelzellen sind zu einem Zellenstapel gestapelt und mit einem Batteriegehäuse umgeben. Die Batterieeinzelzellen sind dabei in Rahmenflachbauweise mit metallischen Blechen und einem Rahmen aus isolierenden Material ausgebildet.

Auch aus der WO 2008/048751 A2 ist ein Batteriemodul mit einer Vielzahl an nebeneinander in einem Stapel angeordneten plattenförmigen Batteriezellen bekannt, welche in einem Gehäuse untergebracht sind.

Die WO 2010/053689 A2 beschreibt eine Batterieanordnung mit einem Gehäuse und einer Mehrzahl von Lithium-Ionen-Zellen, welche nebeneinander angeordnet sind. Das Gehäuse ist zur Kühlung mit einem thermisch leitenden, elektrisch isolierenden Fluid durchströmt.

Aus der WO 2010/067 944 A1 ist eine Batterie mit nebeneinander angeordneten Stapel von Batteriezellen bekannt, wobei Batteriezellen durch Kühlluft gekühlt werden.

Die Druckschrift JP 2007-109546 A beschreibt eine wiederaufladbare Batterie mit zwei nebeneinander angeordneten Batteriemodulen, die in Stapelrichtung versetzt zueinander angeordnet sind.

Die DE 10 2008 034 699 A1 beschreibt eine Batterie mit mehreren parallel und/oder seriell miteinander verschalteten Batteriezellen und einer mit den Batteriezellen Wärme leitend verbundenen Kühlplatte zum Temperieren der Batteriezellen, wobei die Batteriezellen entlang deren Längsachse mittel eines Isolationselements thermisch voneinander isoliert sind. Dabei ist es erforderlich, jeder Batteriezelle in dieses Isolationselement erfordert einzeln anzuordnen, sodass der Zusammenbau dieser Batterie mit einem erheblichen Aufwand verbunden ist. Des Weiteren ist dieser Aufbau insbesondere für Pouchzellen ungeeignet.

Aufgabe der Erfindung ist es, die genannten Nachteile zu vermeiden, und die volumetrische Energiedichte bei einer elektrischen Batterie der eingangs genannten Art zu verbessern.

Erfindungsgemäß wird dies dadurch erreicht, dass zumindest eine Batteriezelle eines Stapels zumindest teilweise überlappend bezüglich zumindest einer Batteriezelle eines benachbarten Stapels angeordnet ist.

Der Versatz der beiden Stapel beträgt vorzugsweise etwa die halbe Dicke einer Batteriezelle. Dies ermöglicht eine dichte Packung.

Um die verbleibenden Hohlräume zu nutzen, kann zwischen zumindest einem überlappenden Bereich der Batteriezellen benachbarter Stapel zumindest ein erster Kühlluftkanal ausgebildet sein.

Zumindest eine Batteriezelle ist von einer Kunststoffzellhülle umgeben, wobei die Kunststoffzellhülle eine - vorzugsweise etwa im Bereich einer Zellmittelebene - umlaufend entlang der Schmalseite der Batteriezelle angeordnete, vorragende Siegelnaht aufweist. Zwischen den Siegelnähten von benachbarten Batteriezellen eines Stapels ist jeweils ein Freiraum aufgespannt. Dieser Freiraum kann einen ersten und/oder zweiten Kühlluftkanal bilden. Dabei kann zumindest ein erster Kühlluftkanal in Richtung einer Hochachse der Batterie und zumindest ein zweiter Kühlluftkanal in Richtung einer normal zur Hochachse und normal zur Stapelrichtung ausgebildeten Querachse der Batterie angeordnet sein.

Um eine einfache Fertigung zu ermöglichen, ist es vorteilhaft, wenn jeweils zwei Stapel mit teilweise überlappenden Batteriezellen ein Batteriemodul bilden, wobei vorzugsweise jedes Batteriemodul zwischen zwei vorzugsweise thermisch und/oder elektrisch isolierend ausgebildete Platten angeordnet ist.

Über den ersten Kühlluftkanal wird der Bereich zwischen den beiden benachbarten Stapeln durchströmt und gekühlt. Die von Kühlluft durchströmten zweiten Kühlluftkanäle sind an der Oberseite der Batterie angeordnet und dienen der Kühlung der Zellpole und/oder der elektrischen Zellverbinder. Dabei kann eine besonders gute Kühlung letzterer erreicht werden, wenn zumindest ein vorzugs

weise ein U-Profil oder Y-Profil aufweisender Zellverbinder zur elektrischen Verbindung zweier benachbarter Batteriezellen in einen zweiten Kühlluftkanal hineinragt. Die ersten und/oder zweiten Kühlluftkanäle können dabei Teil eines geschlossenen Kühlluftkreislaufes zur Kühlung der Batterie sein, wobei vorzugsweise der Kühlluftkreislauf zumindest ein Kühlluftgebläse und zumindest einen Wärmetauscher aufweist. Durch den geschlossenen Kühlluftkreislauf kann die Kühlung der Batterie weitgehend unabhängig von nachteiligen Umwelteinflüssen, wie Temperatur- und Feuchtigkeitsschwankungen, Luftverschmutzung, oder dergleichen, durchgeführt werden. Dies gewährleistet konstante optimale Betriebsbedingungen für die Batterie und ermöglicht eine hohe Lebensdauer derselben.

Zumindest eine Siegelnaht einer Batteriezelle eines ersten Stapels kann in einen von Siegelnähten zweier benachbarter Batteriezellen eines zweiten Stapels aufgespannten Freiraum hineinragen. Dabei können die den Freiraum begrenzenden oder in den Freiraum ragenden Siegelnähte Strömungsleitflächen für Kühlluft ausbilden. Dadurch wird einerseits die Kühlluftführung verbessert und andererseits die von Kühlluft überstrichene Oberfläche vergrößert.

Um eine thermische Überhitzung von benachbarten Batteriezellen möglichst zu vermeiden, ist vorgesehen, dass zwischen zweier benachbarter Batteriezellen zumindest eines Stapels eine thermische und elektrische Isolationsschicht angeordnet ist, wobei vorzugsweise die Isolationsschicht durch eine Isolationsfolie gebildet ist.

Durch die beschriebenen Maßnahmen kann der erforderliche Bauraum verringert und die volumetrische Energiedichte erhöht werden.

Die Erfindung wird im Folgenden anhand der Fig. näher erläutert. Es zeigen:
- Fig. 1: eine erfindungsgemäße Batterie in einer Schrägansicht von oben;
- Fig. 2: die Batterie in einem Schnitt gemäß der Linie II - II in Fig. 1;
- Fig. 3: die Batterie in einer Vorderansicht;
- Fig. 4: die Batterie in einer Schrägansicht von unten;

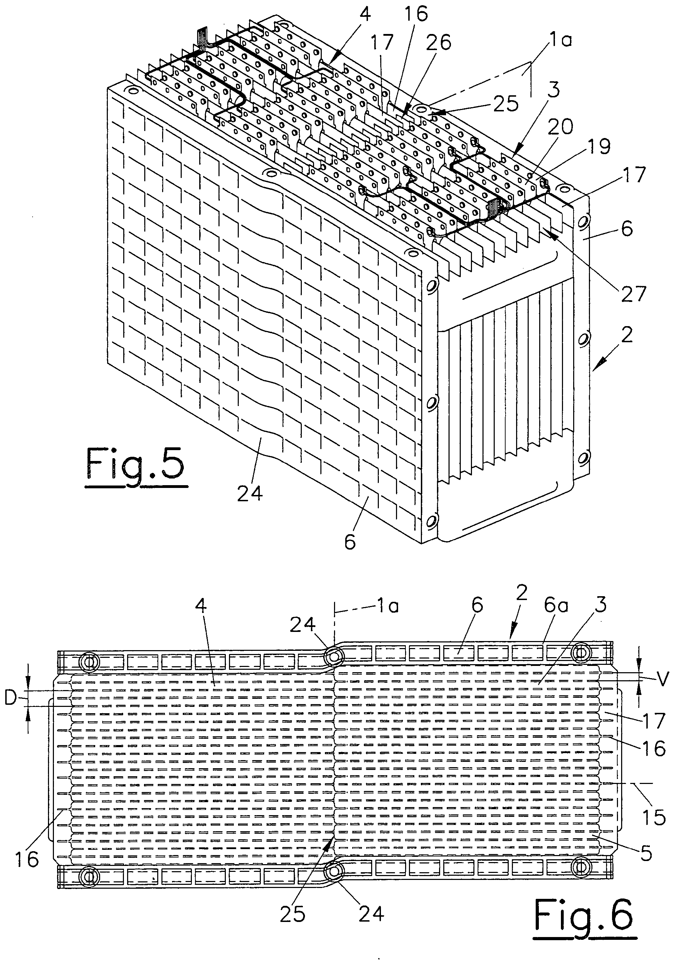

- Fig. 5: ein Batteriemodul der Batterie in einer Schrägansicht;
- Fig. 6: dieses Batteriemodul in einer Ansicht von unten;

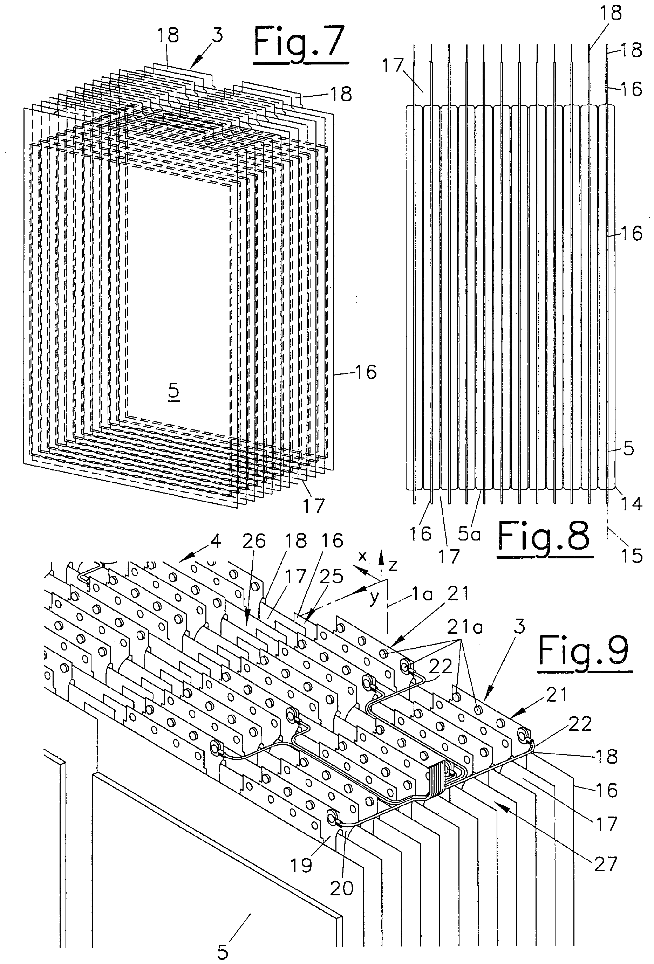

- Fig. 7: einen Stapel von Batteriezellen in einer Schrägansicht;
- Fig. 8: diesen Stapel in einer Seitenansicht;
- Fig. 9: die Stapel von Batteriezellen eines Batteriemoduls in einer Schrägansicht;

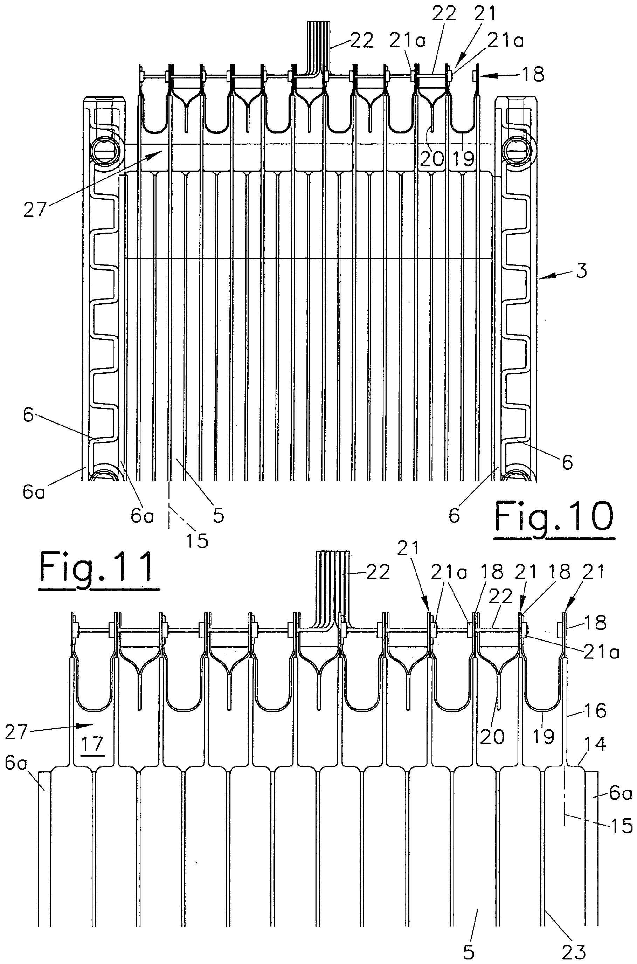

- Fig. 10: ein Batteriemodul in einem Schnitt gemäß der Linie X - X in Fig. 9; und
- Fig. 11: ein Detail dieses Batteriemoduls in einem Schnitt analog zu Fig. 10.

Die wiederaufladbare Batterie 1 weist im Ausführungsbeispiel sieben Batteriemodule 2 auf, wobei jedes Batteriemodul 2 zwei Stapel 3, 4 von nebeneinander angeordneten und verspannten Batteriezellen 5 aufweist. Die Stapel 3, 4 jedes Batteriemoduls 2 sind zwischen zwei struktursteifen gewellten Platten 6 aus Metall, z.B. Aluminium, oder Kunststoff, angeordnet, wobei die Platten 6 durch Druckgussteile gebildet sein können. Die Platten 6 selbst sind zwischen zwei Halteplatten 7, 8 an der Vorder- und Rückseite der Batterie 1 eingespannt, wobei die Halteplatte 7 an der Vorderseite über Spannschrauben 9 mit der Halteplatte 8 an der Rückseite fest verbunden ist. Die Spannschrauben 9 sind dabei jeweils im Bereich der Platten 6 angeordnet. Die Platten 6 bilden zusammen mit den Halteplatten 7, 8 einen Halterahmen 10 für die Batteriemodule 2. Die Halteplatten 7, 8 weisen Öffnungen auf, um das Gewicht so gering wie möglich zu halten. Der - in Stapelrichtung y gesehene - definierte Abstand zwischen den Spannschrauben 9 gewährleistet, dass die Batteriezellen 5 lagerichtig und mit bestimmter und über die Lebensdauer der Batterie 1 im Wesentlichen unveränderlicher Vorspannung verbaut sind. Zwischen den Platten 6 und den angrenzenden Batteriezellen 5 ist dabei jeweils eine elastische Isolierschicht 6a, beispielsweise aus einem Schaumstoff, angeordnet, welcher eine gleichmäßige und schonende Druckverteilung ermöglicht.

Nach unten wird die Batterie 1 durch eine Bodenplatte 11 abgeschlossen.

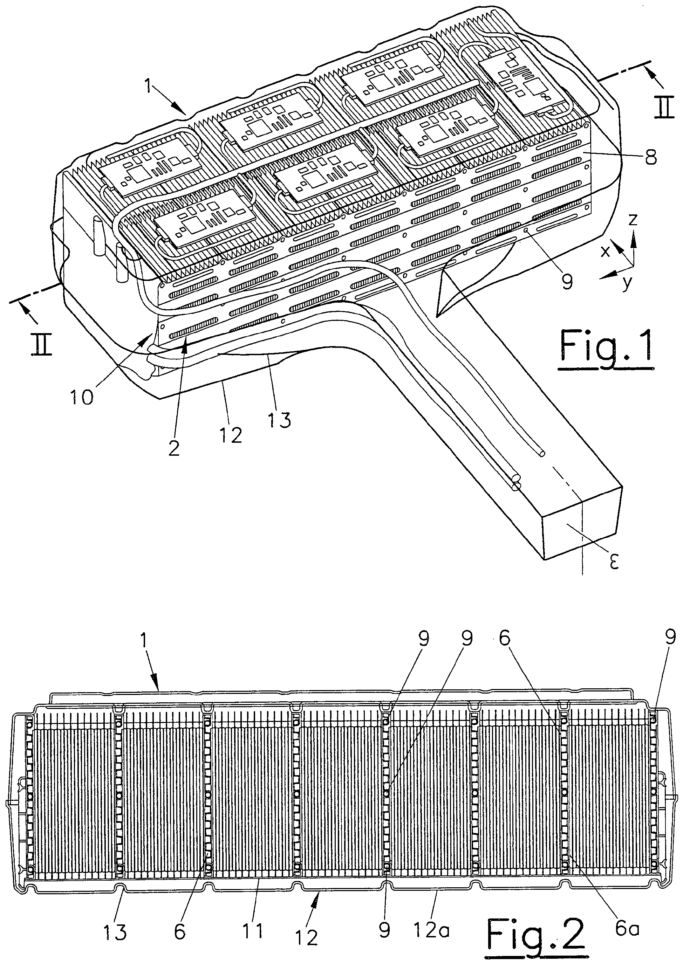

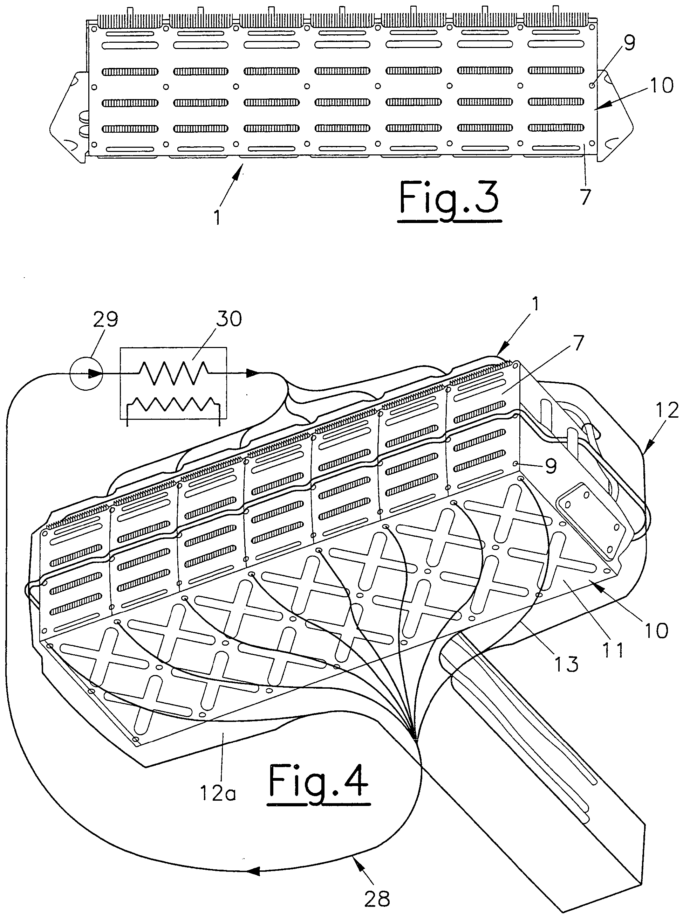

Die Batterie 1 samt Halterahmen 10 ist in einem Gehäuse 12 angeordnet, wobei zwischen dem Gehäuse 12 und der Batterie 1 Kühlluftströmungswege ausgebildet sind. Zur Führung der Kühlluftströmung sind in den Gehäuseboden 12a Strömungsleitflächen 13 eingearbeitet, wie aus Fig. 2 und 4 ersichtlich ist.

Jede Batteriezelle 5 ist von einer Kunststoffhülle 14 umgeben, wobei die Kunststoffhülle 14 etwa im Bereich einer Zellmittelebene 15 entlang der Schmalseite 5a eine vorragende Siegelnaht 16 zur Abdichtung aufweist. Zwischen den Siegelnähten 16 zweier benachbarter Batteriezellen 5 eines Stapels 3, 4 ist jeweils ein Freiraum 17 aufgespannt.

Um Bauraum einzusparen, sind die zwei nebeneinander angeordneten Stapel 3, 4 jedes Batteriemoduls 2 versetzt und überlappend zueinander ausgebildet. Der Versatz V beträgt dabei etwa der halben Dicke D einer Batteriezelle 5. Die Siegelnähte 16 einer Batteriezelle 5 des einen Stapels 3, 4 ragen dabei in einen von Siegelnähten 16 zweier benachbarter Batteriezellen 5 des anderen Stapels 4, 3 aufgespannten Freiraum 17 hinein. Dadurch kann der Freiraum 17 zumindest teilweise durch die Unterbringung eines Teiles der Siegelnähte 16 genutzt werden. Dies wirkt sich sehr vorteilhaft auf die Größe des verbauten Raumes und auf die volumetrische Energiedichte aus. Der Versatz v zwischen den beiden Stapeln 3, 4 bewirkt, dass die Platten 6 im Bereich einer Längsmittelebene 1a der Batterie 1 eine Stufe 24 ausbilden.

An der oberen Schmalseite 5a ragen aus den Kunststoffhüllen 14 Zellpole 18, welche über U- und Y-förmige Zellverbinder 19, 20 miteinander verbunden sind. Die Verbindung zwischen den Zellverbindern 19, 20 und den Zellpolen 18 kann als einen oder mehrere Clinchpunkte 21a aufweisende Durchsetzfügeverbindung 21 in einem Durchsetzfügeverfahren ausgeführt sein. Dies ermöglicht eine besonders hohe Stromtragfähigkeit durch nebeneinander angeordnete Mehrfachfügepunkte sowie eine korrosionsfeste Langzeitverbindung auf Grund der luftdicht abgeschlossenen Fügestellen und eine einfache Kontaktierung der Zellpole 18 mit unterschiedlichen Materialien (Kupfer zu Aluminium und umgekehrt), ohne zusätzliche Bauteile. Mittels Durchsetzfügeverfahren lassen sich zwei bis vier Bleche miteinander elektrisch mit dem selben Werkzeug verbinden, wobei sich besonders die Materialien Kupfer, Aluminium und Stahl, bei Wandstärken von 0,1 mm bis 0,5 mm eignen. Gegebenenfalls können somit in einem Arbeitsschritt gleichzeitig mit den Zellverbindern 19, 20 auch Zellspannungsüberwachungskabel 22 an den Zellpolen 18 in einem Durchsetzfügeverfahren angebunden werden. Da die Position der Clinchpunkte 21a der Durchsetzfügeverbindung 21 mehr streuen darf, als zum Beispiel bei einer Laserschweißverbindung, ergibt sich ein relativ hohes Toleranzkompensationsvermögen. Durch Verwendung von Parallel- und Mehrfachwerkzeugen lässt sich für größere Stückzahlen eine einfache und kostengünstige Fertigung realisieren, wobei nur wenige und leicht beherrschbare Einflussgrößen wie Materialwandstärke, Presskraft etc. vorliegen. Durch die in den Kühlluftkanal 27 ragenden Clinchpunkte 21a wird die wärmeableitende Oberfläche der Batterie 1 erhöht, was insbesondere bei direkter Luftkühlung der Zellpole 18 von Bedeutung ist. Die hervorstehenden Clinchpunkte 21a tragen dabei auch zur Turbulenzerhöhung bei, was insbesondere bei Luftkühlung den Wärmetransport verbessert. Durch Ihre positive Auswirkung auf die Kühlung tragen somit Clinchpunkte 21a auch zur Erhöhung der volumetrischen Energiedichte durch effiziente Bauraumausnutzung bei.

Um eine besonders gute volumetrische Energiedichte zu erreichen, ist es erforderlich, die Batteriezellen 5 möglichst nahe aneinander zu positionieren. Dazu wird zwischen den Batteriezellen 5 eine möglichst dünne, thermische und elektrische Isolatorschicht 23, zum Beispiel eine Isolationsfolie, angeordnet, um das Auftreten eines "Dominoeffektes" bei einer thermischen Überlastung einer benachbarten Batteriezelle 5 zu vermeiden.

Die Freiräume 17 bilden zugleich Kühlluftkanäle 26, 27 aus. Im Bereich der Überlappung 25 der beiden Stapel 3, 4, also im Bereich der Längsmittelebene 1a der Batterie 1, bilden die Freiräume 17 erste Kühlluftkanäle 26, welche in Richtung der Hochachse z der Batterie 1 angeordnet sind. Die Siegelnähte 16 bilden dabei Strömungsleitflächen für die Luftströmung und wärmeabführende Oberflächen. In Richtung einer Querachse x normal auf die Hochachse z und normal auf die Stapelrichtung y sind zweite Kühlluftkanäle 27 im Bereich der Zellpole 18 durch die Freiräume 17 an der Oberseite der Batteriezellen 5 gebildet.

Die ersten und zweiten Kühlluftkanäle 26, 27 sind Teil eines geschlossenen Kühlluftkreislaufes 28 zur Kühlung der Batterie 1, wobei der Kühlluftkreislauf 28 zumindest ein Kühlluftgebläse 29 und zumindest einen Wärmetauscher 30 aufweist. Die Kühlluft wird dabei - vom Kühlluftgebläse 29 und dem Wärmetauscher 30 kommend - in das Gehäuse 12 im Bereich der Halteplatte 9 an der Rückseite und/oder Oberseite der Batterie 1 oder im Bereich der Zellpole 18 zugeführt. Die Kühlluft durchströmt dabei die zweiten Kühlluftkanäle 27 und kühlt Zellpole 18 und Zellverbinder 19, 20. Danach gelangt zumindest ein Teil der Kühlluft in die ersten Kühlluftkanäle 26, welche die Kühlluft entgegen der Hochachse z nach unten führen. Dabei werden alle Zwischenräume und Freiräume 17 der Batterie 1 durchströmt und anfallende Wärme abgeführt. Zwischen der Halteplatte 8 an der Vorderseite der Batterie 1 und dem Gehäuse 12 strömt auch die restliche Kühlluft zum Gehäuseboden 12a des Gehäuses 12, wo es durch die Strömungsleitflächen 13 zur Fahrzeuglängsmittelebene ε geleitet und gesammelt wird. Danach wird die Kühlluft wieder durch das Kühlluftgebläse angesaugt und im Wärmetauscher 30 abgekühlt, bevor es wieder im geschlossenen Kühlkreislauf 28 der Batterie 1 zugeführt wird.

## Patentansprüche

1. Wiederaufladbare elektrische Batterie (1), insbesondere Hochspannungsbatterie, vorzugsweise für ein Elektrofahrzeug, mit zumindest zwei Stapel (3, 4) von in Stapelrichtung (y) aneinandergereihten Batteriezellen (5), wobei die Stapel (3, 4) quer zur Stapelrichtung nebeneinander angeordnet sind, wobei zumindest zwei nebeneinander angeordnete Stapel (3, 4) in Stapelrichtung (y) versetzt zueinander angeordnet sind, zumindest eine Batteriezelle (5) eines Stapels (3, 4) zumindest teilweise überlappend bezüglich zumindest einer Batteriezelle (5) eines benachbarten Stapels (4, 3) angeordnet ist, und zumindest eine Batteriezelle (5) von einer Kunststoffzellhülle (14) umgeben ist, wobei die Kunststoffzellhülle (14) eine die Batteriezelle umlaufende, entlang der Schmalseite (5a) der Batteriezelle (5) angeordnete, vorragende Siegelnaht (16) aufweist, **dadurch gekennzeichnet, dass** zwischen jeweils den Siegelnähten (16) von benachbarten Batteriezellen (5) eines Stapels (3, 4) ein Freiraum (17) aufgespannt ist, wobei zumindest eine Siegelnaht (16) einer Batteriezelle (5) des einen Stapels (3, 4) in einen von den Siegelnähten (16) zweier benachbarter Batteriezellen (5) des anderen Stapels (4, 3) aufgespannten Freiraum (17) hineinragt.

2. Batterie (1) nach Anspruch 1, **dadurch gekennzeichnet, dass** der Versatz (V) der beiden Stapel (3, 4) etwa die halbe Dicke (D) einer Batteriezelle (5) beträgt.

3. Batterie (1) nach Anspruch 1 oder 2, **dadurch gekennzeichnet, dass** im Bereich der Überlappung (25) zumindest ein erster Kühlluftkanal (26) ausgebildet ist.

4. Batterie (1) nach einem der Ansprüche 1 bis 3, **dadurch gekennzeichnet, dass** die Kunststoffzellhülle (14) eine etwa im Bereich einer Zellmittelebene (15) umlaufend entlang der Schmalseite (5a) der Batteriezelle (5) angeordnete, vorragende Siegelnaht (16) aufweist.

5. Batterie (1) nach einem der Ansprüche 1 bis 4, **dadurch gekennzeichnet, dass** zumindest ein Freiraum (17) einen ersten und/oder zweiten Kühlluftkanal (26, 27) ausbildet.

6. Batterie (1) nach Anspruch 5, **dadurch gekennzeichnet, dass** zumindest ein erster Kühlluftkanal (26) in Richtung einer Hochachse (z) der Batterie (1) und zumindest ein zweiter Kühlluftkanal (27) in Richtung einer normal zur Hochachse (z) und normal zur Stapelrichtung (y) ausgebildeten Querachse (x) der Batterie (1) angeordnet ist.

7. Batterie (1) nach einem der Ansprüche 1 bis 6, **dadurch gekennzeichnet, dass** zwischen zwei benachbarten Batteriezellen (5) zumindest eines Stapels (3, 4) eine thermische und elektrische Isolatorschicht (23) angeordnet ist, wobei vorzugsweise die Isolatorschicht (21) durch eine Isolationsfolie gebildet ist.

8. Batterie (1) nach einem der Ansprüche 1 bis 7, **dadurch gekennzeichnet, dass** zumindest ein Freiraum (17) einen Kühlluftkanal (26, 27) bildet, wobei die den Freiraum (17) begrenzenden oder in den Freiraum (17) ragenden Siegelnähte (16) Strömungsleitflächen für Kühlluft ausbilden.

9. Batterie (1) nach einem der Ansprüche 1 bis 8, **dadurch gekennzeichnet, dass** zumindest ein - vorzugsweise ein U-Profil oder Y-Profil aufweisender - Zellverbinder (19, 20) zur elektrischen Verbindung zweier benachbarter Batteriezellen (5) in einen zweiten Kühlluftkanal (27) hineinragt.

10. Batterie (1) nach einem der Ansprüche 5bis 9, **dadurch gekennzeichnet, dass** die ersten und/oder zweiten Kühlluftkanäle (26, 27) Teil eines geschlossenen Kühlluftkreislaufes (28) zur Kühlung der Batterie (1) sind, wobei vorzugsweise der Kühlluftkreislauf (28) zumindest ein Kühlluftgebläse (29) und zumindest einen Wärmetauscher (30) aufweist.

11. Batterie (1) nach einem der Ansprüche 1 bis 10, **dadurch gekennzeichnet, dass** jeweils zwei Stapel (3, 4) mit teilweise überlappenden Batteriezellen (5) ein Batteriemodul (2) bilden, wobei vorzugsweise jedes Batteriemodul (2) zwischen zwei vorzugsweise thermisch und/oder elektrisch isolierend ausgebildete Platten (6) angeordnet ist.

12. Batterie (1) nach Anspruch 11, **dadurch gekennzeichnet,** die Platten (6) im Bereich der Überlappung (25) eine Stufe (24) aufweisen.

## Claims

1. Rechargeable electric battery (1), in particular a high-voltage battery, preferably for an electric vehicle, having at least two stacks (3, 4) of battery cells (5) strung together in the direction of stacking (y), wherein the stacks (3, 4) are arranged side-by-side transversely to the direction of stacking, wherein at least two stacks (3, 4) arranged side-by-side are arranged offset relative to each other in the direction of stacking (y), at least one battery cell (5) of a stack (3, 4) is arranged at least partly overlapping with respect to at least one battery cell (5) of an adjacent stack (4, 3), and at least one battery cell (5) is encapsulated by a plastic cell casing (14), wherein the plastic cell casing (14) has a protruding sealing seam (16) which surrounds the battery cell and is arranged to run along the narrow side (5a) of the battery cell (5), **characterised in that** a space (17) is defined between each of the sealing seams (16) of the adjacent battery cells (5) of a stack (3, 4), wherein at least one sealing seam (16) of a battery cell (5) of the one stack (3, 4) projects into a space (17) defined by the sealing seams (16) of two adjacent battery cells (5) of the other stack (4, 3).

2. Battery (1) according to claim 1, **characterised in that** the offset (V) of the two stacks (3, 4) is about half the thickness (D) of a battery cell (5).

3. Battery (1) according to claim 1 or 2, **characterised in that** at least one first cooling air channel (26) is formed in the area of the overlap (25).

4. Battery (1) according to one of the claims 1 to 3, **characterised in that** the plastic cell casing (14) has a protruding sealing seam (16) which is arranged approximately in the area of a cell middle plane (15) and runs circumferentially along the narrow side (5a) of the battery cell (5),

5. Battery (1) according to one of the claims 1 to 4, **characterised in that** at least one space (17) forms a first and/or second cooling air channel (26, 27).

6. Battery (1) according to claim 5, **characterised in that** at least a first cooling air channel (26) is arranged in the direction of a vertical axis (z) of the battery (1) and at least a second cooling air channel (27) is arranged in the direction of a transverse axis (x) of the battery (1) formed at a right angle to the vertical axis (z) and at a right angle to the direction of stacking (y).

7. Battery (1) according to one of the claims 1 to 6, **characterised in that** a thermal and electrical insulation layer (23) is arranged between two adjacent battery cells (5) of at least one stack (3, 4), wherein preferably the insulating layer (21) is formed by an insulating foil.

8. Battery (1) according to one of the claims 1 to 7, **characterised in that** at least one space (17) forms a cooling air channel (26, 27), wherein the sealing seams (16) bordering the space (17) or projecting into the space (17) form guide surfaces for the cooling air flow.

9. Battery (1) according to one of the claims 1 to 8, **characterised in that** at least one cell connector (19, 20) - preferably having a U profile or Y profile - for electrically connecting two adjacent battery cells (5) projects into a second cooling air channel (27).

10. Battery (1) according to one of the claims 5 to 9, **characterised in that** the first and/or second cooling air channels (26, 27) are part of a closed cooling air circuit (28) for cooling the battery (1), wherein preferably the cooling air circuit (28) has at least one cooling air fan (29) and at least one heat exchanger (30).

11. Battery (1) according to one of the claims 1 to 10, **characterised in that** each two stacks (3, 4) with partially overlapping battery cells (5) form a battery module (2), wherein preferably each battery module (2) is arranged between two plates (6) preferably formed in a thermally and/or electrically insulating manner.

12. Battery (1) according to Claim 11, **characterised in that** the plates (6) are provided with a step (24) in the region of the overlap (25).

## Revendications

1. Batterie électrique rechargeable (1), en particulier batterie haute tension destinée de préférence à un véhicule électrique comprenant au moins deux piles (3, 4) de cellule des batterie (5) réparties côte à côte en rangées dans la direction d'empilement (y), les piles (3, 4) étant situées côte à côte transversalement au dispositif d'empilement, au moins deux piles (3, 4) situées côte à côte dans la direction d'empilement (y) étant décalées l'une par rapport à l'autre dans la direction d'empilement, au moins une cellule de batterie (5) d'une pile (3, 4) étant positionnée de façon à chevaucher au moins partiellement au moins une cellule de batterie (5) d'une pile (3, 4) voisine, et au moins une cellule de batterie (5) étant entourée par une enveloppe de cellule en un matériau synthétique (14), l'enveloppe de cellule en matériau synthétique (14) comportant au moins un fil de scellement en saillie (16) entourant la cellule de batterie, s'étendant le long du petit côté (5a) de la cellule de batterie (5), **caractérisée en ce qu'**
entre les fils de scellement (16) respectifs de cellules de batterie (5) voisines d'une pile (3, 4) est inséré un volume libre (17), et au moins un fil de scellement (16) d'une cellule de batterie (5) de l'une des piles (3, 4) pénètre dans un volume libre (17) inséré entre les fils de scellement (16) de deux cellules de batterie voisines (5) de l'autre pile (3, 4).

2. Batterie (1) conforme à la revendication 1,
**caractérisée en ce que**
le décalage (V) entre les deux piles (3, 4) est environ égal à la moitié de l'épaisseur (D) d'une cellule de batterie (5).

3. Batterie (1) conforme à la revendication 1 ou 2,
**caractérisée en ce que**
dans la zone de chevauchement (25) est formé au moins un premier canal de refroidissement (26).

4. Batterie (1) conforme à l'une des revendications 1 à 3,
**caractérisée en ce que**
l'enveloppe de cellule en matériau synthétique (14) comporte un fil de scellement en saillie (16) s'étendant essentiellement dans la zone du plan médian (15) d'une cellule de batterie (5) le long de son petit côté (5a).

5. Batterie (1) conforme à l'une des revendications 1 à 4,
**caractérisée en ce qu'**
au moins un volume libre (17) forme un premier et/ ou un second canal d'air de refroidissement (26, 27).

6. Batterie (1) conforme à la revendication 5,
**caractérisée en ce qu'**
au moins un canal d'air de refroidissement (26) est situé dans la direction de l'axe vertical (z) de la batterie (1) et au moins un second canal d'air de refroidissement (27) est situé dans la direction d'un axe transversal (x) de la batterie (1) perpendiculaire à l'axe vertical (z) et à la direction d'empilement (y).

7. Batterie (1) conforme à l'une des revendications 1 à 6,
**caractérisée en ce qu'**
entre deux cellules de batterie voisines (5) d'au moins une pile (3, 4) est montée une couche d'isolation thermique et électrique (23), et de préférence cette couche d'isolation (21) est formée par une feuille isolante.

8. Batterie (1) conforme à l'une des revendications 1 à 7,
**caractérisée en ce qu'**
au moins un volume libre (17) forme un canal d'air de refroidissement (26, 27), les fils de scellement (16) délimitant le volume libre (17) ou pénétrant dans le volume libre (17) formant des surfaces de guidage de flux pour l'air de refroidissement.

9. Batterie (1) conforme à l'une des revendications 1 à 8,
**caractérisée en ce qu'**
au moins un organe de liaison de cellules (19, 20) ayant de préférence un profil en U ou un profil en Y pénètre dans un second canal d'air de refroidissement (27) pour permettre la liaison électrique de deux cellules de batterie (5) voisines.

10. Batterie (1) conforme à l'une des revendications 5 à 9,
**caractérisée en ce que**
le premier canal de refroidissement et/ou le second canal de refroidissement (26, 27) est(sont) une ou des partie(s) d'un circuit d'air de refroidissement fermé (28) permettant de refroidir la batterie (1), et de préférence le circuit d'air de refroidissement (28) comporte au moins un ventilateur d'air de refroidissement (29) et au moins un échangeur de chaleur (30).

11. Batterie (1) conforme à l'une des revendications 1 à 10, **caractérisée en ce que**
deux piles (3, 4) respectives ayant des cellules de batterie (5) se chevauchant partiellement, forment un module de batterie (2), et de préférence chacun des modules de batterie (2) est positionné entre deux plaques (6) de préférence thermiquement et/ou électriquement isolantes.

12. Batterie (1) conforme à la revendication 11,
**caractérisée en ce que**
les plaques (6) comportent un gradin (24) dans la zone du chevauchement (25).
